# EUROPEAN PATENT SPECIFICATION

(11) **EP 3 960 533 B1**
(45) Date of publication and mention of the grant of the patent: **18.12.2024**
(21) Application number: 20860325.8
(22) Date of filing: 03.09.2020
(51) Int. Cl.: B60L 53/12, B60L 58/12, B60L 58/19, B60L 8/00, B60K 16/00, B60K 7/00, B60L 58/22, H01M 10/42, H02J 50/10, H01M 10/44, H02J 7/00

(54) **BATTERY SYSTEM AND METHOD FOR CONTROLLING BATTERY SYSTEM**
BATTERIESYSTEM UND VERFAHREN ZUR STEUERUNG DES BATTERIESYSTEMS
SYSTÈME DE BATTERIE ET PROCÉDÉ DE COMMANDE DE SYSTÈME DE BATTERIE

(30) Priority: 06.09.2019 KR 20190111070
(43) Date of publication of application: 02.03.2022
(73) Proprietor: LG Energy Solution, Ltd., Seoul 07335 (KR)
(72) Inventor: KIM, Ji Eun, Daejeon 34122 (KR); LEE, Sang Hoon, Daejeon 34122 (KR); PARK, Jae Dong, Daejeon 34122 (KR); CHO, Hyun Ki, Daejeon 34122 (KR)
(74) Representative: Plasseraud IP
(86) International application number: PCT/KR2020/011881
(87) International publication number: WO 2021/045539

(56) References cited:
- JP-A- 2014 239 619
- JP-B2- 5 822 951
- KR-A- 20130 024 790
- KR-A- 20140 087 520
- KR-B1- 101 116 483
- US-A1- 2013 175 975
- No further relevant documents disclosed

## Description

### TECHNICAL FIELD

The present invention relates to a battery system and a controlling method of the same.

### BACKGROUND ART

Among rechargeable secondary batteries, lithium-ion batteries have an advantage over the existing Ni/Cd batteries and Ni/MH batteries in that the energy density of lithium-ion batteries is much higher. In addition, lithium-ion batteries may be manufactured in a small size and light weight, and accordingly, may be used as power sources for mobile devices. The lithium-ion batteries are drawing attention as a next-generation energy storage medium as their range of use has expanded to power sources for electric vehicles.

The secondary battery such as the lithium-ion battery is used in the form of a battery pack that includes a battery module in which a plurality of battery cells are connected in series and/or in parallel, and a battery management system (BMS) controlling the charging and discharging of the battery module.

For an electric vehicle, a battery pack with high capacity, high output and fast charging time is required due to its use characteristics. However, as the capacity and output characteristics of the above-mentioned battery pack are higher, the burden on charging increases. On the other hand, if the fast charging is repeated in order to satisfy the fast charging time, the battery pack is adversely affected.

Further background art is described in KR 2014 0087520 A, JP 5 822951 B2 and JP 2014-239619 A.

### DISCLOSURE OF THE INVENTION

### TECHNICAL PROBLEM

The present invention has been made in consideration of the above problems, and an object of the present invention is to provide a battery system capable of efficiently charging a high-capacity, high-output battery pack, and a controlling method of the battery system.

### TECHNICAL SOLUTION

To solve the above-described limitations, according to an aspect of the present invention there is provided a battery system including a plurality of rechargeable battery packs, and including: a first battery pack that is rechargeable; a second battery pack that is rechargeable independently of the first battery pack; a first switching element that switches the first battery pack among a charging node, a discharging node and an open node; a second switching element that switches the second battery pack among the charging node, the discharging node and the open node; and a controller that controls switching states of the first switching element and the second switching element based on usage states and states of charge of the first battery pack and the second battery pack.

Moreover, in the present invention, each of the first battery pack and the second battery pack may further include a wireless power transmission/reception module, and when the first battery pack is switched to the charging node and the second battery pack is switched to the open node, the second battery pack wirelessly transmits power to the first battery pack through the wireless power transmission/reception module.

According to an embodiment of the present disclosure, one of the first battery pack and the second battery pack may be connected to the charging node and wirelessly transmit power to the other battery pack through the wireless power transmission module.

According to an embodiment of the present disclosure, the discharging node may be electrically connected to a motor.

According to an embodiment of the present disclosure, the charging node may be electrically connected to a power source from renewable energy.

According to an embodiment of the present disclosure, the battery system may further include a power storage device for storing power generated from the renewable energy.

According to an embodiment of the present disclosure, the battery system may further include a power generation device for generating power from the renewable energy.

According to an embodiment of the present disclosure, the power generation device may include at least one of devices for generating power by solar energy, wind energy, pressure energy, and kinetic energy.

According to an embodiment of the present disclosure, the battery system may further include a plurality of additional battery packs that are rechargeable independently of the first battery pack and the second battery pack, and the first battery pack, the second battery pack, and the additional battery packs may be divided into a plurality of groups each including at least one battery pack.

According to an embodiment of the present disclosure, each of the plurality of groups may have a corresponding switching element and a discharging node, and each of the plurality of groups is electrically connected to a different corresponding motor through the corresponding switching element and the discharging node to perform charging and discharging operations independently of other groups.

According to an embodiment of the present disclosure, the plurality of groups may be provided corresponding to motors installed corresponding to respective wheels of a vehicle.

According to an embodiment of the present disclosure, the controller may control charging and discharging operations of each of the plurality of groups according to a drive type of the vehicle.

According to an aspect of embodiments of the present disclosure, there is provided a controlling method of a battery system including a first battery pack and a second battery pack that are rechargeable independently of each other, the controlling method including: determining a traveling state of a vehicle; determining states of charge of the first battery pack and the second battery pack; switching the first battery pack among a discharging node, a charging node and an open nodebased on the traveling state and the state of charge; and switching the second battery pack between the charging node, the discharging node and the open node based on the traveling state and the state of charge.

### ADVANTAGEOUS EFFECTS

With the configurations described above, the battery system and the controlling method of the battery system enable efficient charging of a high-capacity and high-output battery pack mounted in a vehicle.

### BRIEF DESCRIPTION OF THE DRAWINGS

FIG. 1 is a block diagram illustrating a configuration of a battery system according to an embodiment of the present disclosure.
FIG. 2 is a diagram illustrating a configuration of a switching element according to an embodiment of the present disclosure.
FIG. 3 is a diagram illustrating a configuration of a vehicle to which a battery system according to an embodiment of the present disclosure is applied.
FIG. 4 is a conceptual schematic diagram illustrating embodiments of the present disclosure.
FIG. 5 is a block diagram illustrating functions of a battery management system according to an embodiment of the present disclosure.
FIG. 6 is a hardware configuration diagram to which a battery management system according to an embodiment of the present disclosure is applied.
FIG. 7 is an operational state diagram of a battery system according to an embodiment of the present disclosure.
FIG. 8 is a block diagram illustrating a configuration of a vehicle to which a battery system according to another embodiment of the present disclosure is applied.
FIG. 9 is an additional operational state diagram of a battery system according to another embodiment of the present disclosure.
FIGS. 10a and 10b are flowcharts illustrating a controlling method of a battery system according to an embodiment of the present disclosure.
FIG. 11 is a flowchart illustrating a controlling method of a battery system according to another embodiment of the present disclosure.
FIG. 12 is a flowchart illustrating a controlling method of a battery system according to yet another embodiment of the present disclosure.
FIG. 13 is a diagram illustrating a configuration of a vehicle to which a battery system according to yet another embodiment of the present disclosure is applied.
FIG. 14 is a diagram illustrating a configuration of a vehicle to which a battery system according to yet another embodiment of the present disclosure is applied.
FIG. 15 is a diagram illustrating a configuration of a vehicle to which a battery system according to yet another embodiment of the present disclosure is applied.

### MODE FOR CARRYING OUT THE INVENTION

Hereinafter, various embodiments of the present disclosure will be described in detail with reference to the accompanying drawings. In the present disclosure, the same reference numerals are used for the same elements in the drawings, and duplicate descriptions for the same elements are omitted.

In various embodiments of the present disclosure disclosed herein, specific structural or functional descriptions are merely exemplary for the purpose of describing embodiments of the present disclosure, and various embodiments of the present disclosure may be implemented in various forms and should not be construed as being limited to the embodiments described herein.

As used in various embodiments, the terms such as "first", "second", "the first", or "the second" may modify various components, regardless of order and/or importance, but do not limit the components. For example, without departing from the scope of the present disclosure, a first element could be termed a second element, and similarly, in reverse, a second element could be termed a first element.

The terms and phrases as used herein are merely provided to describe specific embodiments, and may not be intended to limit the scope of other embodiments. A singular form is intended to include a plural form, unless the context clearly indicates otherwise.

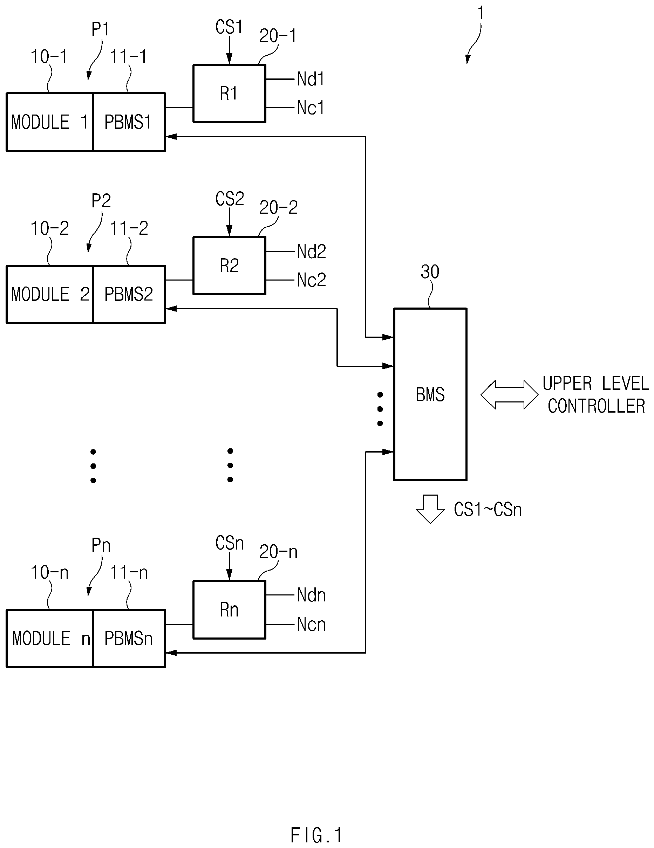

FIG. 1 is a block diagram illustrating a configuration of a battery system according to an embodiment of the present disclosure.

A battery system 1 according to the present embodiment may include a plurality of rechargeable battery packs P1 to Pn (n is an integer of 2 or more), a plurality of switching elements 20-1 to 20-n, and a battery management system 30 (hereinafter, also referred to as 'EMS').

The battery pack Pn may include a battery module 10-n in which a plurality of battery cells are connected in series and/or in parallel, and a pack BMS 11-n controlling and managing the battery module 10-n.

The battery module 10-n may include rechargeable secondary battery cells capable of charging and discharging as battery cells. The number of battery cells included in the battery module 10-n may be determined according to an output and capacity required by a specification of a device to which the battery pack Pn is to be mounted, for example, a vehicle.

The pack BMS 11-n monitors the state of the battery module 10-n and controls charging and discharging operations. The pack BMS 11-n transmits the monitored state of the battery module 10-n to the BMS 30 controlling and managing the entire battery system 1. In addition, the pack BMS 11-n may receive various control signals from the BMS 30 and may perform various operations, such as charging and discharging and cell balancing of the battery module 10-n, according to the received control signals.

The battery pack Pn is configured to be capable of charging and discharging independently of other battery packs. For example, while the battery pack P1 performs the charging operation, the battery pack P2 may perform the discharging operation. Alternatively, while the battery pack P1 performs the discharging operation, the battery pack P2 may operate independently of other battery packs, for example, may be in a non-operating state without performing the charging or discharging operation. That is, all battery packs P1 to Pn do not have to be used in the same operation mode all the time.

The battery packs P1 to Pn may operate independently of each other, and a plurality of battery packs P1 to Pn may be divided into a plurality of groups and battery packs within each group may operate in the same mode and may operate independently of those in other groups.

The switching element 20-n switches the battery pack Pn at least between the charging node and the discharging node. The switching elements 20-n may be selectively connected at least to the charging node and the discharging node to charge the battery pack Pn with external power or supply power stored in the battery pack Pn to an external device. In addition, the switching element 20-n may further include an open node to selectively connect the battery pack Pn to any one among the three nodes, that is, the charging node, the discharging node, and the open node.

The switching element 20-n may receive a control signal from the BMS 30 and perform a switching operation. Alternatively, the switching element 20-n may control the switching operation through the pack BMS 11-n receiving a control signal from the BMS 30.

A relay Rn may be applied as the switching element 20-n.

In the present embodiment, it has been described that one switching element 20-n is selectively connected to three nodes; however, the present disclosure is not limited thereto. For example, a switching element for controlling the connection between the battery pack Pn and the charging node and a switching element for controlling the connection between the battery pack Pn and the discharging node may be separately provided such that the same function as the above-described configuration may be implemented.

Meanwhile, the charging nodes Nc1 to Ncn to which respective switching elements 20-1 to 20-n are connected may be a common node electrically connected to a power source such as renewable energy. If power is generated by using at least two of a plurality of types of renewable energy, for example, solar photovoltaic energy, solar thermal energy, wind energy, pressure energy, and kinetic energy, the generated energy may be connected to all the charging nodes to be implemented as charging buses for charging. However, this is only exemplary, and the charging node may be provided for each power source and each switching element 20-1 to 20-n may be implemented in a form in which it is connected to some or all of the charging nodes provided for each power source.

The discharging nodes Nd1 to Ndn to which the respective switching elements 20-1 to 20-n may be connected are electrically connected to a device to which the battery pack P1 to Pn supplies power, for example, a motor of an electric vehicle. In this case, the discharging nodes Nd1 to Ndn may be connected to one device, or may be divided to be connected to a plurality of devices. For example, if a plurality of motors are provided in an electric vehicle, the discharging nodes Nd1 to Ndn may be implemented to be connected to any one of the plurality of motors. That is, for each of the plurality of battery packs P1 to Pn, a motor for supplying power is determined, and a switching element corresponding to a discharging node for supplying power to the determined motor may be connected.

The BMS 30 manages the entire battery system 1 and controls its operation. The BMS 30 receives data obtained by monitoring states of the battery modules 10-1 to 10-n from the plurality of pack BMSs 11-1 to 11-n. The received data may include data regarding the usage state, the state of charge, temperature, and the lifespan of the battery packs P1 to Pn. In addition, the BMS 30 transmits a control signal to each of the plurality of pack BMSs 11-1 to 11-n, such that the plurality of pack BMSs 11-1 to 11-n control operations of the respective battery modules 10-1 to 10-n.

The BMS 30 controls the switching states of the switching elements 20-1 to 20-n based on the usage state and the state of charge of the battery packs P1 to Pn, that is, the battery module 10-1 to 10-n, which are received from the plurality of pack BMSs 11-1 to 11-n. That is, the BMS 30 controls the switching states of the switching elements 20-1 to 20-n by applying a control signal to the switching elements 20-1 to 20-n. Of course, as described above, the BMS 30 may transmit a control signal for controlling the switching elements 20-1 to 20-n to the pack BMSs 11-1 to 11-n to control the switching elements 20-1 to 20-n through the pack BMSs 11-1 to 11-n.

The BMS 30 may transmit data regarding the battery system 1 to a upper level controller, and may receive a signal for operation of the battery system 1 from the upper level controller. The upper level controller may be a controller for controlling a device to which the battery system 1 is applied. For example, when the battery system 1 is mounted on a vehicle, the upper level controller may be a vehicle controller.

In the present embodiment, as a configuration for managing and controlling the battery system 1, a configuration in which the BMS 30 is separately provided is illustrated; however, the present disclosure is not limited thereto. For example, the vehicle controller may directly perform the operation as the BMS 30 described above.

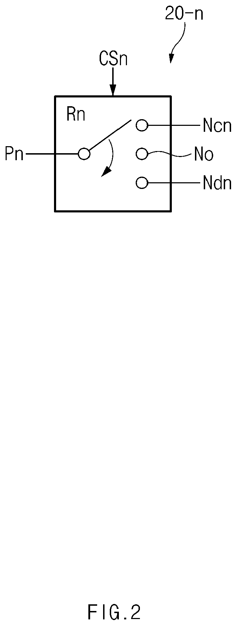

FIG. 2 is a diagram illustrating a configuration of a switching element according to an embodiment of the present disclosure.

The switching element 20-n selectively connects a terminal connected to the battery pack Pn to one of the charging node Ncn, the discharging node Ndn, and the open node No. The open node No may be an actual node, but may be a virtual node in a state of not be connected to the charging node Ncn or the discharging node Ndn.

The state of the switching element 20-n is switched based on the control signal applied from the BMS 30.

The charging node Ncn may be a node to which power from renewable energy is supplied, and may be a charging bus to which all power generated by a plurality of energy sources is supplied.

The discharging node Ndn may be electrically connected to a device to which the battery pack Pn is to supply power.

As described above, in the battery system 1 according to the embodiment of the present disclosure, the plurality of battery packs P1 to Pn may be provided, and the plurality of battery packs P1 to Pn may perform charging and discharging operations independently of each other. Therefore, even if one battery pack is in a discharging state, that is, in a state in which power is supplied to drive the device, the other battery pack may perform charging. For example, while the vehicle is traveling, some battery packs may be used to drive the motor, and other battery packs may be charged.

Therefore, it is always possible to properly maintain the state of charge of the battery pack, thereby saving charging time in charging the battery pack. In addition, there is no need to charge the battery pack only in the fast charging mode, and as a result, it is possible to increase the lifespan of the battery pack.

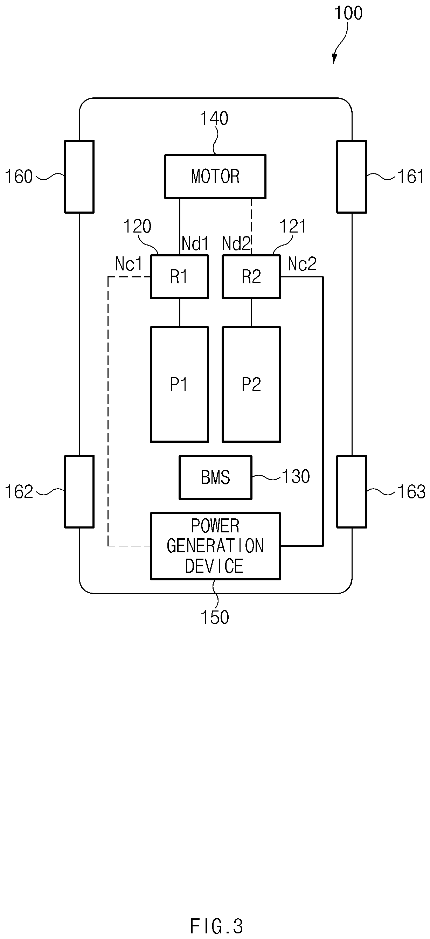

FIG. 3 is a diagram illustrating a configuration of a vehicle to which a battery system according to an embodiment of the present disclosure is applied.

A vehicle 100 according to the present embodiment includes battery packs P1 and P2, switching elements 120 and 121, a BMS 130, a motor 140, a power generation device 150, and wheels 160 to 163.

A plurality of battery packs P1 and P2 each include battery modules that may operate independently of each other and a pack BMS that controls these modules.

The first battery pack P1 is connected to the first switching element 120. The first battery pack P1 is selectively connected to the motor 140 or the power generation device 150 through the first switching element 120. Alternatively, the first switching element 120 may be controlled in an open state in which it is not connected to any of the motor 140 and the power generation device 150.

If the first battery pack P1 is connected to the motor 140 through the discharging node Nd1 of the first switching element 120, the first battery pack P1 may supply the stored power to the motor 140, which, in turn, may generate a driving force for driving the wheels 160 to 161 of the vehicle 100.

If the first battery pack P1 is connected to the power generation device 150 through the charging node Nc1 of the first switching element 120, the first battery pack P1 may receive power generated by the power generation device 150 to perform charging.

The second battery pack P2 is connected to the second switching element 121. The second battery pack P2 is selectively connected to the motor 140 or the power generation device 150 through the second switching element 121. Alternatively, the second switching element 121 may be controlled in an open state in which it is not connected to any of the motor 140 and the power generation device 150.

If the second battery pack P2 is connected to the motor 140 through the discharging node Nd2 of the second switching element 121, the second battery pack P2 may supply the stored power to the motor 140, which, in turn, may generate a driving force for driving the wheels 160 and 161 of the vehicle 100.

If the second battery pack P2 is connected to the power generation device 150 through the charging node Nc2 of the second switching element 121, the second battery pack P2 may receive power generated by the power generation device 150 to perform charging.

The operations of the first battery pack P1 and the second battery pack P2 may be operated in the same mode or in different modes depending on the switching states of the first switching element 120 and the second switching element 121. That is, the operation of each of the battery packs P1 and P2 may be independently controlled.

In the present embodiment, the first battery pack P1 is shown as being connected to the motor 140 to operate as a driving pack, and the second battery pack P2 is shown as being connected to the power generation device 150 through the charging node Nc2 to operate in the charging mode (a solid line indicates that current flows by mutual connection, and a dotted line indicates that electrical connection is possible, but the switch is open and current does not flow).

The BMS 130 receives data obtained by monitoring states of the battery modules from pack BMSs of the first battery pack P1 and the second battery pack P2. The received data may include various types of information such as the operating state and the state of the charge, the temperature, and the lifespan of the battery modules. In addition, the BMS 130 may receive, from the vehicle controller, information on the operation of the vehicle and a control signal for controlling the battery system depending on the state of the vehicle.

The BMS 130 controls the switching states of the first switching element 120 and the second switching element 121 based on the received usage states and states of charge of the first battery pack P1 and the second battery pack P2, the state of the vehicle, and the like. This control makes it possible for the first battery pack P1 and the second battery pack P2 to operate independently in various modes.

The motor 140 transmits a driving force to the wheels 160 to 163 to drive the vehicle. The motor 140 is connected to the first battery pack P1 and/or the second battery pack P2 to receive power stored in the first battery pack P1 and/or the second battery pack P2. The motor 140 generates a rotational force based on the supplied power, and transmits the generated rotational force to the wheels 160 to 163.

The power generation device 150 is a device for generating electric power from renewable energy. The renewable energy used in the power generation device 150 may include solar photovoltaic energy, solar thermal energy, wind energy, pressure energy, kinetic energy, and the like. However, these are exemplary, and energy sources other than those listed may be also used. The power generation device 150 may further include an auxiliary battery or the like separately to supply power to the first battery pack 1, the second battery pack P2, the motor 140, and the like.

When a plurality of types of renewable energy are used as energy sources, the power generation device 150 may be provided with a power generation device for generating power with each type of renewable energy. That is, as many power generation devices as the number of energy sources used may be provided.

The power generation device 150 may be connected to a charging bus to supply all of the generated power to one charging node. Alternatively, the power generation device 150 may have a charging node and a charging bus separately for each energy source.

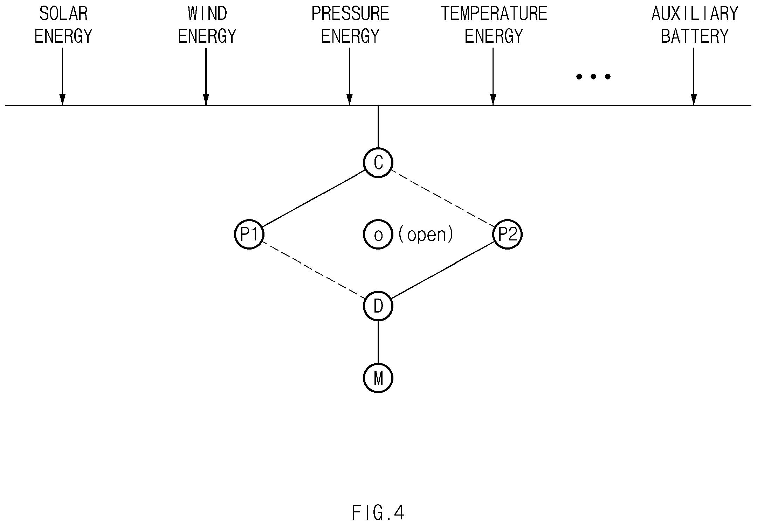

FIG. 4 is a conceptual schematic diagram illustrating embodiments of the present disclosure.

As illustrated in FIG. 4, power generated by various types of renewable energy such as solar energy (solar photovoltaic and solar thermal), wind energy, pressure energy, and temperature energy may be supplied to the charging node. In addition, an auxiliary battery may be connected although it is not renewable energy.

The discharging node is connected to the motor.

The first battery pack P1 and the second battery pack P2 may be connected to an appropriate place in the charging node and the discharging node based on the usage states and the states of charge of the first battery pack P1 and the second battery pack P2, and the state of the vehicle.

As described above, in the battery system 1 according to the embodiment of the present disclosure, the plurality of battery packs P1 and P2 may be provided, and the plurality of battery packs P1 and P2 may perform charging and discharging operations independently of each other. Therefore, even if one battery pack is in a discharging state, that is, in a state in which power is supplied to drive the device, the other battery pack may perform charging. For example, while the vehicle 100 is traveling, the first battery pack P1 may be used to drive the motor, and the second battery pack P2 may be charged.

Therefore, it is always possible to properly maintain the states of charge of the battery pack P1 and the battery pack P2, thereby saving charging time in charging the battery packs. In particular, even when the vehicle 100 is charged at a charging station, since the battery pack P1 and the battery pack P2 maintain appropriate states of charge, there is no need to charge the battery packs only in the fast charging mode, and as a result, it is possible to increase the lifespans of the battery pack P1 and the battery pack P2.

In addition, by using various types of renewable energy as power sources for charging, even if the amount of power generated by one power generation device is small in a specific environment, it is possible to use the power generated by another power generation device, and thus they may function as stable power sources.

Hereinafter, the functions and configuration of the BMS 130 will be described in more detail.

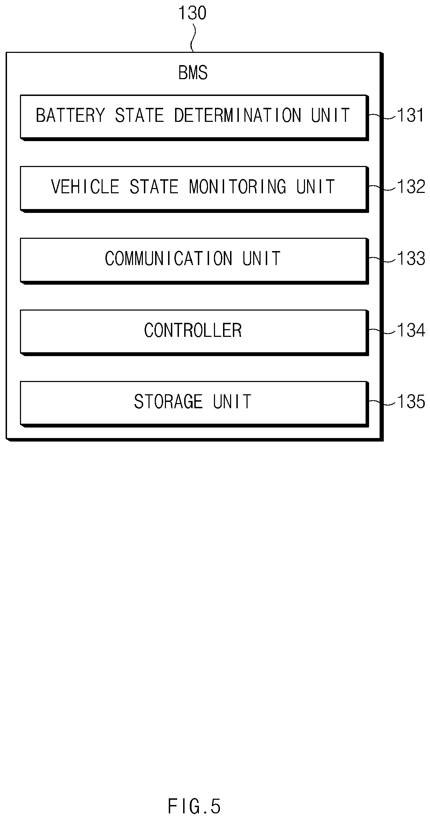

FIG. 5 is a block diagram illustrating functions of the battery management system 130 according to an embodiment of the present disclosure.

Referring to FIG. 5, the BMS 130 may include a battery state determination unit 131, a vehicle state monitoring unit 132, a communication unit 133, a controller 134, and a storage unit 135.

The battery state determination unit 131 determines the states of the battery packs P1 and P2 included in the battery system installed in the vehicle 100. The states of the battery packs P1 and P2 may include the usage state, the state of charge, the lifespan, and the temperature. The battery state determination unit 131 may receive data indicating the state of each of the battery packs P1 and P2 from pack BMSs provided in the battery packs P1 and P2. However, the present disclosure is not limited thereto, and the battery state determination unit 131 may receive values measured by the pack BMSs and calculate data based on the received values.

The vehicle state monitoring unit 132 monitors states of the vehicle 100 in which the battery system is mounted. The states of the vehicle 100 may include various contents related to the vehicle 100 such as information on a driving mode, such as traveling, stopping, and traveling, and information on an abnormal situation, such as a safety situation. The vehicle state monitoring unit 132 may receive a result of monitoring the states of the vehicle 100 from a vehicle controller, which is a upper level controller. Alternatively, the vehicle state monitoring unit 132 may directly monitor some or all of the states of the vehicle 100.

The communication unit 133 transmits and receives data, control signals, and the like, to and from pack BMSs included in the battery packs P1 and P2. In addition, the communication unit 133 may transmit and receive data and control signals to and from the vehicle controller, which is the upper level controller. That is, data regarding the states of the battery packs P1 and P2 may be received from the pack BMSs through the communication unit 133. In addition, data regarding the states of the vehicle may be received through the communication unit 133.

The controller 134 controls the overall operation of the BMS 130. In addition, the controller 134 controls the switching operation of the switching elements 120 and 121 based on the states of the battery packs P1 and P2 and the states of the vehicle 100 acquired by the battery state determination unit 131 and the vehicle state monitoring unit 132. For example, it is assumed that the vehicle is traveling, the motor 140 is driven by the first battery pack P1, and the second battery pack P2 is charged. In this case, as illustrated in FIG. 3, the first battery pack P1 and the motor 140 are connected to each other through the discharging node Nd1 of the first switching element 120. Similarly, the second battery pack P2 and the power generation device 150 are connected to each other through the charging node Nc2 of the second switching element 121.

The storage unit 135 stores programs for implementing various functions performed by the controller 134. In addition, the storage unit 135 may temporarily or permanently store data and control signals transmitted and received through the communication unit 133. Furthermore, the storage unit 135 stores data on the result calculated by the battery state determination unit 131 and the vehicle state monitoring unit 132.

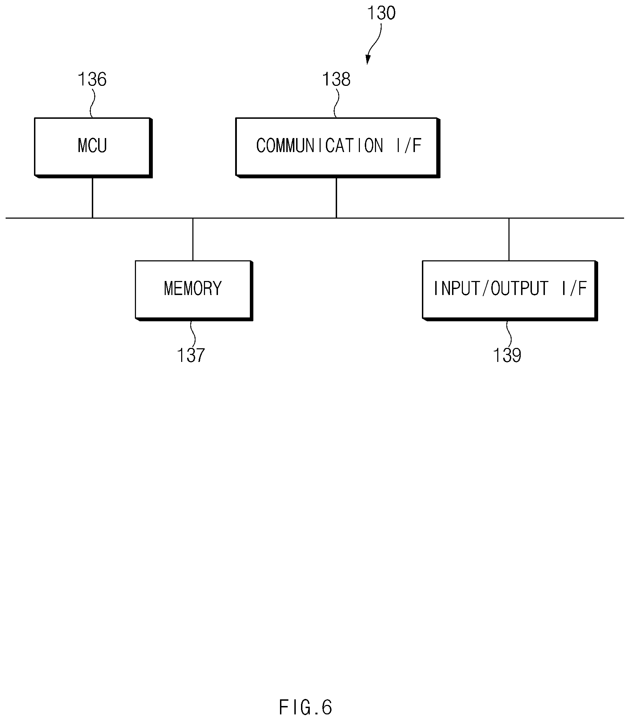

FIG. 6 is a hardware configuration diagram to which the battery management system 130 according to an embodiment of the present disclosure is applied.

Referring to FIG. 6, the BMS 130 may include a controller (MCU) 136, a memory 137, a communication interface 138, and an input/output interface 139.

The MCU 136 processes various operations and arithmetic operations in the BMS 130 and controls each component.

The memory 137 records an operating system program and a program for performing the functions of the BMS 130. The memory 137 may include a volatile memory and a nonvolatile memory. For example, as the memory 137, at least one of various storage media such as a semiconductor memory, for example, RAM, ROM, and a flash memory, a magnetic disk, and an optical disk may be used.

The communication interface 138 is configured to communicate with the outside by wire and/or wirelessly.

The input/output interface 139 performs input/output of various input signals and output signals. For example, the MCU 136 may output a control signal for a switching operation of the switching element through the input/output interface 139.

The MCU 136 may implement a module that performs functions of the battery state determination unit 131 and the vehicle state monitoring unit 132 by executing a program stored in the memory 137. In addition, the MCU 136 may communicate with the upper level controller through the communication unit 137 to receive data regarding the states of the vehicle and to receive data regarding the state of the battery pack from the pack BMS.

By the operation of the BMS 130 described above, the battery system may operate in various states as follows.

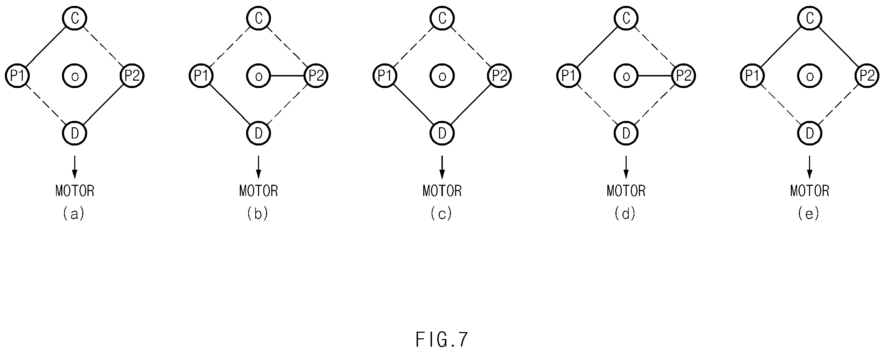

FIG. 7 is an operational state diagram of a battery system according to an embodiment of the present disclosure.

Referring to FIG. 7, various combinations of states that the first battery pack P1 and the second battery pack P2 may have are illustrated. (a) is a case in which the first battery pack P1 is set as a charging pack and the second battery pack P2 is set as a driving pack. That is, the first battery pack P1 is connected to the charging node to be charged, and the second battery pack P2 is connected to the discharging node to supply power to the motor.

(b) is a case in which the first battery pack P1 is set as the driving pack and the second battery pack P2 is set not to perform charging and discharging operations. In this case, the first battery pack P1 is connected to the discharging node to supply power to the motor, whereas the second battery pack P2 is connected (or opened) to the open node such that power transmission/reception to/from the outside is blocked.

(c) is a case in which both the first battery pack P1 and the second battery pack P2 are set as driving packs. In this case, the first battery pack P1 and the second battery pack P2 are simultaneously connected to the discharging node to supply power to the motor. That is, the first battery pack P1 and the second battery pack P2 are connected in parallel. For example, (c) may be applied when high output is required for the vehicle or when the remaining amount of the first battery pack P1 and the second battery pack P2 is low. However, in order to connect the first battery pack P1 and the second battery pack P2 in parallel, it is desirable that the states of charge of the first battery pack P1 and the second battery pack P2 are the same.

The above (a) to (c) are cases in which the vehicle is driven by using the motor.

(d) is a case in which the first battery pack P1 is set as the charging pack and the second battery pack P2 is set not to perform charging and discharging operations. In this case, the first battery pack P1 is connected to the charging node to be charged, whereas the second battery pack P2 is connected to the open node such that power transmission/reception to/from the outside is blocked. For example, (d) may be applied when the vehicle is charged at a charging station, when there is a large amount of power remaining in the second battery pack P2, or the like.

(e) is a case in which both the first battery pack P1 and the second battery pack P2 are set as the charging packs. In this case, the first battery pack P1 and the second battery pack P2 are simultaneously connected to the charging node to be charged. That is, the first battery pack P1 and the second battery pack P2 are connected in parallel. However, in order to connect the first battery pack P1 and the second battery pack P2 in parallel, it is desirable that the states of charge of the first battery pack P1 and the second battery pack P2 are the same.

The above (d) and (e) are cases in which the motor is not driven while the vehicle is at a standstill or parked. Alternatively, a case in which the vehicle is being charged at the charging station may be included in (d) and (e).

In the present embodiment, the five operating states of (a) to (e) have been described by way of example, but the present disclosure is not limited thereto, and it will be apparent to those of ordinary skill in the art that other operating states may exist. In addition, a case in which the connection relationship of the first battery pack P1 and the second battery pack P2 is opposite is substantially the same in terms of function, and thus description thereof has been omitted.

As described above, in the battery system which is applied to the vehicle 100 according to the embodiment of the present disclosure, the plurality of battery packs P1 and P2 may be provided, and the plurality of battery packs P1 and P2 may perform charging and discharging operations independently of each other. Therefore, even if one battery pack is in a discharging state, that is, in a state in which power is supplied to drive the device, the other battery pack may perform charging. For example, while the vehicle 100 is traveling, the first battery pack P1 may be used to drive the motor, and the second battery pack P2 may be charged.

Therefore, it is always possible to properly maintain the states of charge of the battery pack P1 and the battery pack P2, thereby saving charging time in charging the battery packs. In particular, even when the vehicle 100 is charged at a charging station, since the battery pack P1 and the battery pack P2 maintain appropriate states of charge, there is no need to charge the battery packs only in the fast charging mode, and as a result, it is possible to increase the lifespans of the battery pack P1 and the battery pack P2.

In addition, by using various types of renewable energy as power sources for charging, even if the amount of power generated by one power generation device is small in a specific environment, it is possible to use the power generated by another power generation device, and thus they may function as a stable power source.

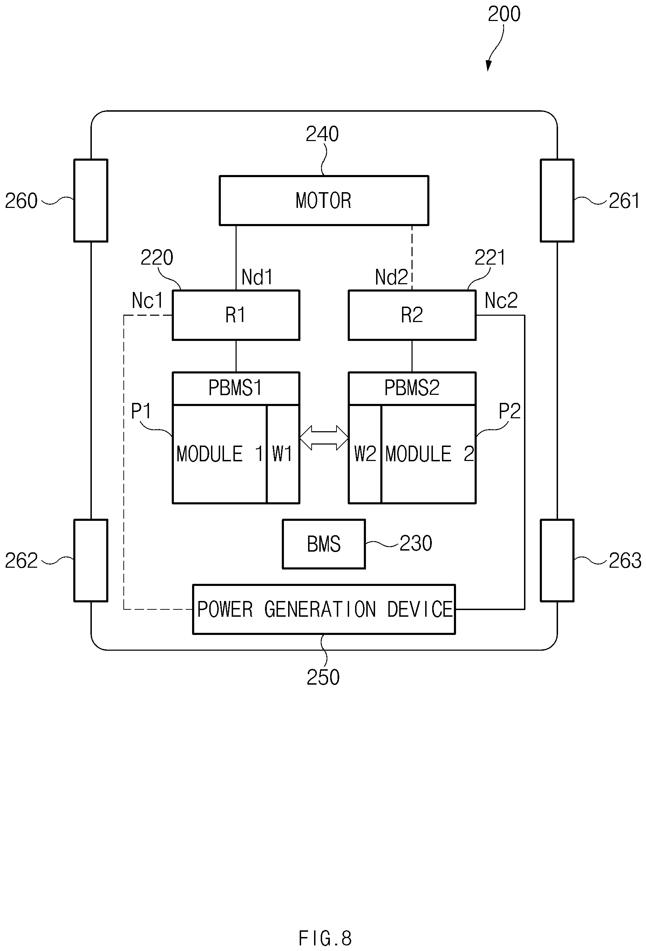

FIG. 8 is a diagram illustrating a configuration of a vehicle 200 to which a battery system according to another embodiment of the present disclosure is applied. In FIG. 8, the configuration and operation will be described centering on different parts from those of the vehicle 100 of FIG. 3.

Referring to FIG. 8, in the battery system applied to the vehicle 200, the first battery pack P1 and the second battery pack P2 further include wireless power transmission/reception modules W1 and W2, respectively. The wireless power transmission/reception modules W1 and W2 may wirelessly transmit and receive power to and from each other, thereby enabling the first battery pack P1 and the second battery pack P2 to perform wireless charging and discharging.

A first pack BMS PBMS1 controls the operation of the first wireless power transmission/reception module W1. That is, the first pack BMS PBMS1 may wirelessly transmit the power stored in a first battery module to a second wireless power transmission/reception module W2 through the first wireless power transmission/reception module W1. Further, the first pack BMS PBMS1 may wirelessly receive power stored in a second battery module from the second wireless power transmission/reception module W2 through the first wireless power transmission/reception module W1.

The first pack BMS PBMS1 may operate the first wireless power transmission/reception module W1 independently of a circuit for charging and discharging the first battery module by wire. That is, the first pack BMS PBMS1 may charge or discharge the first battery module based on the operation of the first switching element 220, and at the same time, may wirelessly transmit power to the second battery pack P2 or wirelessly receive power from the second battery pack P2, by using the first wireless power transmission/reception module W1.

A second pack BMS PBMS2 may also have the same configuration and function as the first pack BMS PBMS1.

Meanwhile, in the battery system applied to the vehicle 200 according to the present embodiment, the relative position or attitude of the first battery pack P1 and the second battery pack P2 have to be adjusted to wirelessly transmit and receive power to and from each other. More specifically, the positions of the first wireless power transmission/reception module W1 of the first battery pack P1 and the second wireless power transmission/reception module W2 of the second battery pack P2 have to be adjusted to wirelessly transmit and receive power to and from each other.

Hereinafter, an additional operating state will be described that the battery system may have when the wireless power transmission/reception modules W1 and W2 are added, as in the present embodiment.

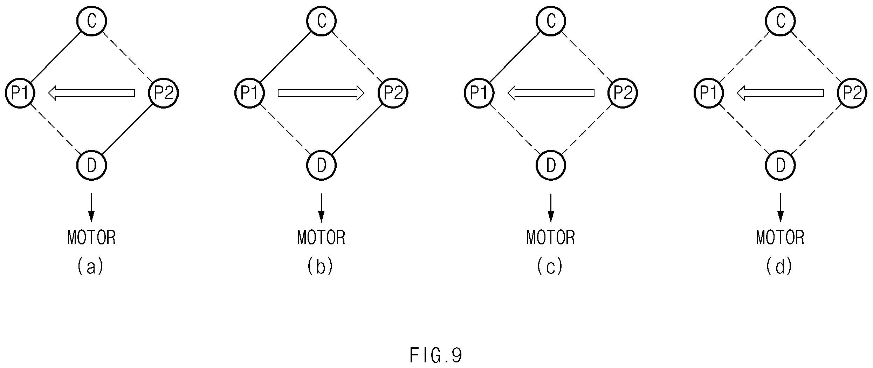

FIG. 9 is an additional operational state diagram of a battery system according to another embodiment of the present disclosure.
(a) is a case in which both a first battery pack P1 is set as a charging pack and a second battery pack P2 is set as a driving pack. That is, the first battery pack P1 is connected to a charging node to be charged, and the second battery pack P2 is connected to a discharging node to supply power to a motor. In addition to this, the second battery pack P2 wirelessly transmits power to the first battery pack P1 and thus the first battery pack P1 is wirelessly charged.
(b) is a case in which the first battery pack P1 is set as the charging pack and the second battery pack P2 is set as the driving pack. That is, the first battery pack P1 is connected to a charging node to be charged, and the second battery pack P2 is connected to a discharging node to supply power to a motor. In addition to this, the first battery pack P1 wirelessly transmits power to the second battery pack P2 and thus the second battery pack P2 is wirelessly charged. For example, when the state of charge (SOC) of the first battery pack P1 being charged is 80% or more, power is transmitted wirelessly from the first battery pack P1 to the second battery pack P2 to manage the state of health (SOH) of the first battery pack P1 by preventing overcharging.
   Above (a) and (b) are cases in which the vehicle is driven by using the motor.
(c) is a case in which the first battery pack P1 is set as the charging pack and the second battery pack P2 is set not to perform charging and discharging operations. In this case, the first battery pack P1 is connected to the charging node to be charged, whereas the second battery pack P2 is connected to the open node such that power transmission/reception to/from the outside is blocked. In addition, the second battery pack P2 wirelessly transmits power to the first battery pack P1 and thus the first battery pack P1 is wirelessly charged.
(d) is a case in which both the first battery pack P1 and the second battery pack P2 do not perform charging and discharging operations. Then, the second battery pack P2 wirelessly transmits power to the first battery pack P1 and thus the first battery pack P1 is wirelessly charged. For example, the above-mentioned operation may be performed in a cell balancing operation.

The above (c) and (d) are cases in which the motor is not driven while the vehicle is at a standstill or parked. Alternatively, a case in which the vehicle is being charged at the charging station may be included in (c) and (d).

Hereinafter, a controlling method of the battery system applied to the vehicle 200 according to FIG. 8 will be described.

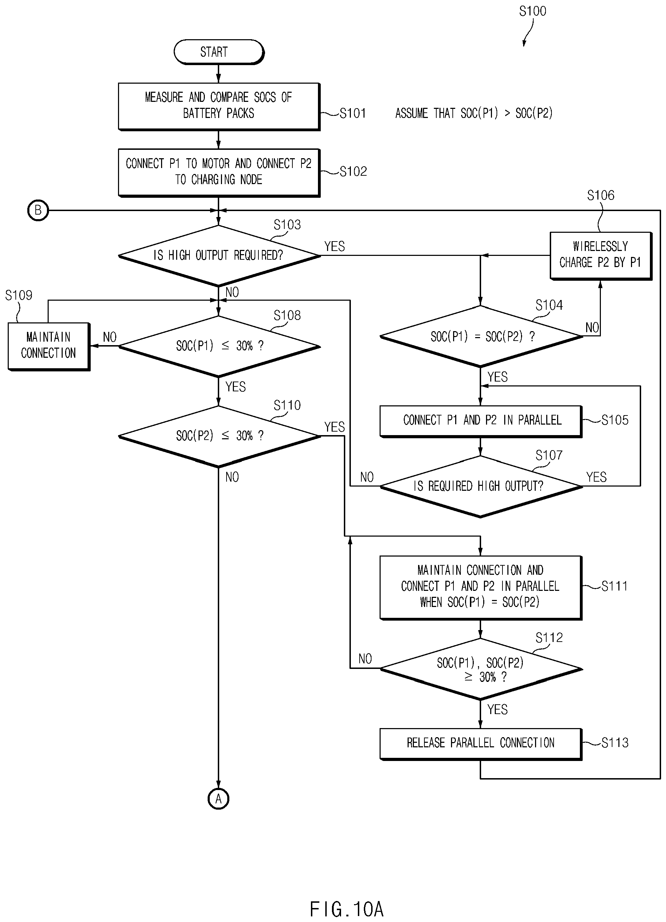

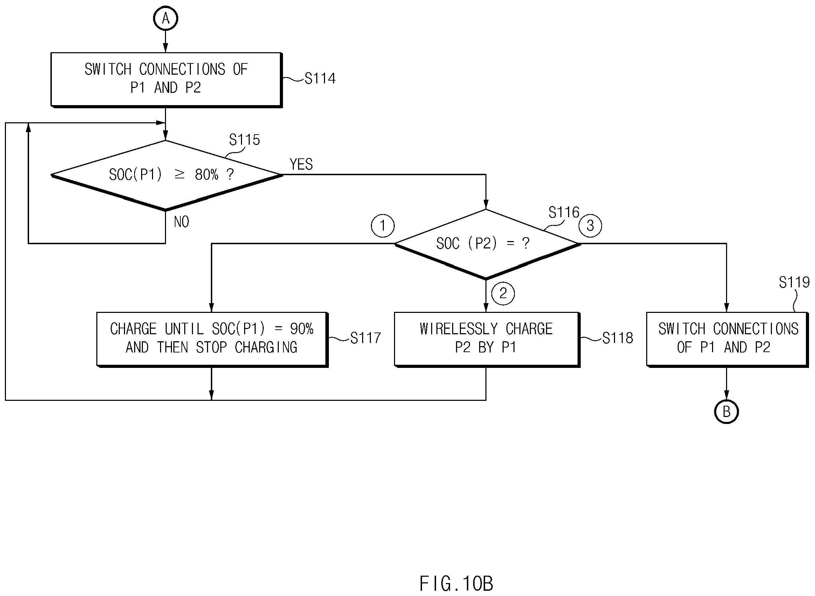

FIGS. 10a and 10b are flowcharts illustrating a controlling method S100 of a battery system according to an embodiment of the present disclosure. In the present embodiment, a controlling method when the vehicle 200 is traveling will be described.

Referring to FIGS. 10a and 10b, first, the BMS 230 measures SOCs of the battery packs P1 and P2, and compares the measured SOC values (S101). The BMS 230 may receive SOC data or data related to SOC calculation from the pack BMS included in the battery packs P1 and P2. In the present embodiment, for convenience, it is assumed that the SOC of the first battery pack P1 is larger than the SOC of the second battery pack P2 (in the opposite case, P1 and P2 may be exchanged with each other in the subsequent operation).

Based on the comparison result, the first battery pack P1 is set as the driving pack. Therefore, the first battery pack P1 is connected to the motor 240 through the discharging node. In addition, based on the comparison result, the second battery pack P2 is set as the charging pack. Therefore, the second battery pack P2 is connected to the charging node (S102) (refer to the state (a) in FIG. 7).

The BMS 230 determines whether the vehicle 200 requires high output while traveling (S103). A situation in which high output is required may include a case of climbing a slope, a case of rapid acceleration, a case of a vehicle traveling in a sport mode, and the like.

If it is determined that high output is required, the BMS 230 determines whether the SOC of the first battery pack P1 and the SOC of the second battery pack P2 are the same by traveling (S104).

If the SOC of the first battery pack P1 and the SOC of the second battery pack P2 are the same, the first battery pack P1 and the second battery pack P2 are connected in parallel such that both packs simultaneously supply power to the motor (S105) (refer to the state (c) in FIG. 7). That is, both the first battery pack P1 and the second battery pack P2 are connected to the motor through the discharging nodes Nd1 and Nd2 of the switching elements 220 and 221.

In step S104, if the SOC of the first battery pack P1 and the SOC of the second battery pack P2 are not the same, the second battery pack P2 is wirelessly charged by the first battery pack P1 (S106) (refer to the state (a) in FIG. 9). That is, power is wirelessly transmitted to the second battery pack P2 through the first power wireless transmission/reception module W1 of the first battery pack P1. Then, the second battery pack P2 wirelessly receives power through the second power wireless transmission/reception module W2, and performs charging with the received power.

After connecting the first battery pack P1 and the second battery pack P2 in parallel to supply high-output power to the vehicle 200, the BMS 230 determines whether the vehicle 200 continues to require high output (S107). If high output is continuously required, steps S105 and S107 are repeated. On the other hand, if high output is no longer required, the process proceeds to step S108.

If the BMS 230 determines that the vehicle does not require high output in step S103 or S107, the BMS 230 determines whether the SOC of the first battery pack P1 is 30% or less (S108). If it is determined that the SOC of the first battery pack P1 exceeds 300, the current connection state of the first battery pack P1 and the second battery pack P2 is maintained and the process returns to step S108 (S109) (the specific numeral value described in the present embodiment, for example, 30% which is the numeral number of the SOC in step S108 is merely exemplary, and may be appropriately modified. That is, the numeral value may be set arbitrarily by the user or may be determined according to a recommended setting by a battery manufacturer so that the numeral value is optimized for the characteristics of battery cells. This will also apply in the following description).

On the other hand, if it is determined that the SOC of the first battery pack P1 is 30% or less, it is determined whether the SOC of the second battery pack P2 is also 300 or less (S110). That is, it is determined whether both the first battery pack P1 and the second battery pack P2 have SOCs less than or equal to the reference value.

If it is determined that the SOC of the second battery pack P2 is less than or equal to 30% in step S110, the current connection state of the first battery pack P1 and the second battery pack P2 is maintained. When the SOC of the first battery pack P1 and the SOC of the second battery pack P2 are the same, the first battery pack P1 and the second battery pack P2 are connected in parallel such that both packs simultaneously supply power to the motor (S111) (refer to the state (c) in FIG. 7).

The SOC of the first battery pack P1 and the SOC of the second battery pack P2 are continuously monitored even during power supply by parallel connection, and it is determined whether the SOC of any one of the first battery pack P1 and the second battery pack P2 is equal to or greater than 300 (S112). If the SOC of any one of the first battery pack P1 and the second battery pack P2 does not reach 300 or more, the process returns to step S111 and repeats steps S111 and S112. On the other hand, if the SOC of any one of the first battery pack P1 and the second battery pack P2 is 300 or more, the parallel connection between the first battery pack P1 and the second battery pack P2 is released, and again, the first battery pack P1 operates as the driving pack and the second battery pack P2 operates as the charging pack. Of course, if necessary, the connection relationship before the parallel connection may be reserved when the parallel connection is released. For example, since the first battery pack P1 is set as a driving pack and the second battery pack P2 is set as a charging pack in step S102 in the present embodiment, in step S113, the reverse setting is possible, that is, the first battery pack P1 may be set as the charging pack and the second battery pack P2 may be set as the driving pack.

Returning to step S110, if it is determined that the SOC of the second battery pack P2 is not equal to or less than 300, the connections of the first battery pack P1 and the second battery pack P2 are switched (S114). That is, the first battery pack P1 is set as the charging pack, and the second battery pack P2 is set as the driving pack. To this end, if the BMS 230 transmits, to the vehicle controller, a signal indicating that the battery pack connection switching is required, the vehicle controller may output, to a vehicle monitor or dashboard, a guide indicating that the battery pack connection switching is required. That is, the vehicle may be guided to a standstill. However, the guidance of the vehicle to a standstill is merely exemplary and the present disclosure is not limited thereto. For example, if it is determined that traveling is possible without a driving force of the motor, for example by going down a slope or traveling by other power, the connection of the battery pack may be switched without stopping the vehicle or guiding the vehicle to a standstill.

If the connection of the first battery pack P1 and the second battery pack P2 is switched and the first battery pack P1 is charged, the BMS 230 determines whether the SOC of the first battery pack P1 is 80% or more by charging (S115). If the SOC of the first battery pack P1 is not 80% or more, step S115 is continuously repeated. On the other hand, if it is determined that the SOC of the first battery pack P1 is 80% or more, the operations of the first battery pack P1 and the second battery pack P2 are controlled depending on the SOC of the second battery pack P2 as in steps S117 to S119 (S116).

If the SOC of the second battery pack P2 is 90% or more, the first battery pack P1 is charged until the SOC becomes 900, and then the charging is stopped (S117) (refer to the state (b) in FIG. 7). That is, one end of a first switch element corresponding to the first battery pack P1 is connected to the open node. This is because the second battery pack P2 is sufficiently charged and does not require additional charging.

On the other hand, if the SOC of the second battery pack P2 is less than 90% and 60% or more, the second battery pack P2 is wirelessly charged by the first battery pack P1 (S118) (refer to the state (a) in FIG. 9). That is, power is wirelessly transmitted to the second battery pack P2 through the first power wireless transmission/reception module W1 of the first battery pack P1. Then, the second battery pack P2 wirelessly receives power through the second power wireless transmission/reception module W2, and performs charging with the received power. This is because the first battery pack P1 is sufficiently charged with the power generated by the power generation device 250 through the charging node and the second battery pack P2 still has room for charging.

Finally, if the SOC of the second battery pack P2 is less than 600, the connection of the first battery pack P1 and the second battery pack P2 is switched again (S119). This is because it is determined that switching between the driving pack and the charging pack is needed since the first battery pack P1 is sufficiently charged but the second battery pack P2 is in a state of consuming some amount of charged power by driving the motor. After switching the connection of the first battery pack P1 and the second battery pack P2, the process returns to step S103.

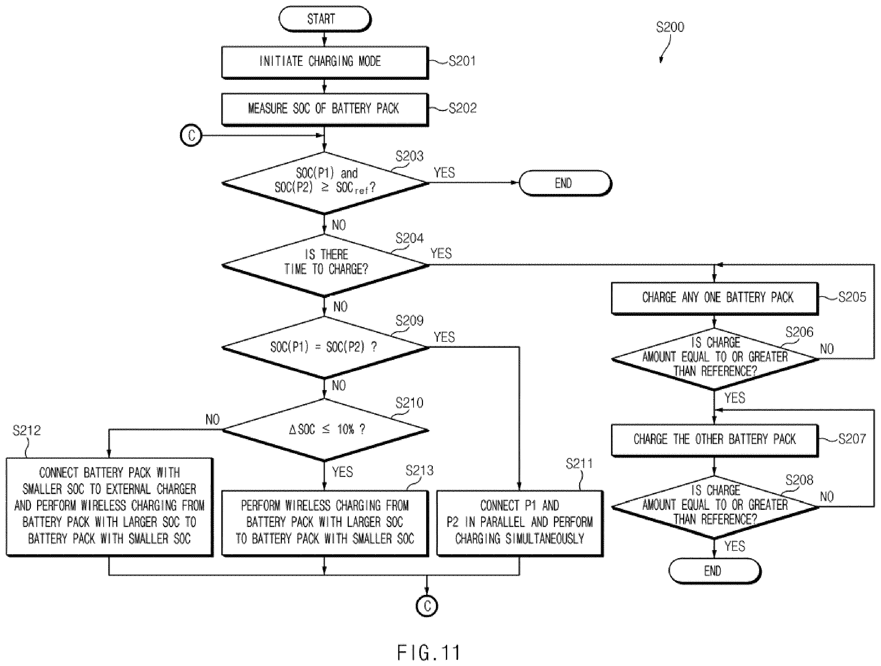

FIG. 11 is a flowchart illustrating a controlling method S200 of a battery system according to another embodiment of the present disclosure. In the present embodiment, a controlling method when the vehicle 200 operates in the charging mode at a charging station will be described.

Referring to FIG. 11, the vehicle 200 initiates the charging mode (S201) . The initiation of the charging mode may be done automatically by the driver connecting the charging cord to the vehicle. Alternatively, the charging mode may be initiated by an instruction input by the driver.

Then, the BMS 230 measures the SOCs of the battery pack P1 and the battery pack P2 (S202). The BMS 230 may receive SOC data or data related to SOC calculation from the pack BMS included in the battery packs P1 and P2.

If the SOCs of both the first battery pack P1 and the second battery pack P2 are equal to or greater than a reference value SOCref, it is determined that charging is not required and the charging mode is ended (Yes in S203). On the other hand, if any of the first battery pack P1 and the second battery pack P2 has an SOC less than the reference value, the process proceeds to step S204 (No in S203).

If any of the first battery pack P1 and the second battery pack P2 has an SOC of less than the reference value, the BMS 230 determines whether there is a time for charging (S204). At this time, the BMS 230 may output a display to inquire about whether the driver has time, and may receive a response thereto from the driver.

If there is time for charging, the BMS 230 initiates charging by connecting any one battery pack to the charging node (S205) (refer to the state (d) in FIG. 7). If there is no time for charging, it would be desirable to first charge the battery pack with the larger SOC in order to fully charge any one battery pack efficiently.

Then, it is determined whether the charge amount of the battery pack is equal to or greater than the reference value (S206). For example, it may be possible to determine whether the charge amount reaches 90%, which does not affect the lifespan of the battery pack.

If the charge amount of the battery pack being charged reaches the reference value or more, the charging is stopped by connecting one side of the switching element of the battery pack being charged to the open node, and the other pack is charged (S207). If the charge amount does not exceed the reference value in step S206, the process returns to step S205.

Similarly, even after S207, an operation of determining whether the charge amount of the battery pack being charged is equal to or greater than the reference value is performed (S208).

On the other hand, if it is determined that there is time for charging in step S204, it is compared whether the SOCs of the first battery pack P1 and the second battery pack P2 are the same (S209).

If the SOC of the first battery pack P1 and the SOC of the second battery pack P2 are the same, the first battery pack P1 and the second battery pack P2 are connected in parallel to perform the simultaneous charging (S211) (refer to the state (e) in FIG. 7).

If the SOC of the first battery packs P1 and the SOC of the second battery pack P2 are not the same, it is determined whether the difference between the SOCs is 10% or less (S210). If the difference between SOCs is less than 10% (that is, the difference between SOCs is not very large), wireless charging is first performed from the battery pack with the larger SOC to the battery pack with the smaller SOC (S210) (refer to the state (d) in FIG. 9). On the other hand, if the difference between SOCs exceeds 10% (that is, the difference between SOCs is large), charging is performed by connecting an external charging cord to the battery pack with the smaller SOC, and at the same time, wireless charging is performed from the battery pack with the larger SOC to the battery pack with the smaller SOC (S213) (refer to the state (c) in FIG. 9).

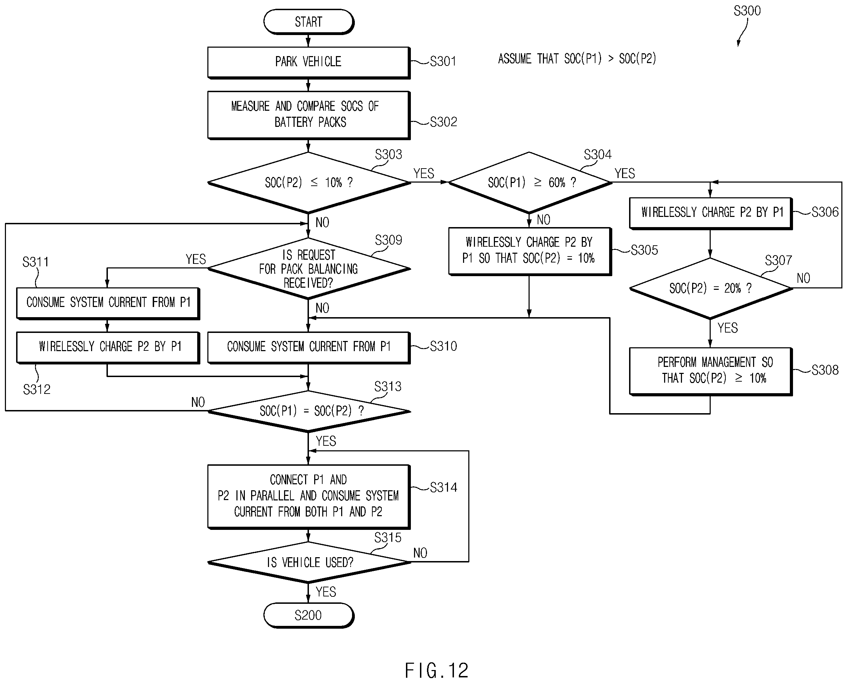

FIG. 12 is a flowchart illustrating a controlling method S300 of a battery system according to yet another embodiment of the present disclosure. In the present embodiment, a controlling method when the vehicle 200 is parked will be described.

Referring to FIG. 11, first, the vehicle 200 enters the parking state (S301), and the BMS 230 measures the SOCs of the battery packs P1 and P2, and compares the measured SOC values (S302). The BMS 230 may receive SOC data or data related to SOC calculation from the pack BMS included in the battery packs P1 and P2. In the present embodiment, for convenience, it is assumed that the SOC of the first battery pack P1 is larger than the SOC of the second battery pack P2 (in the opposite case, P1 and P2 may be exchanged with each other in the subsequent operation).

It is determined whether the SOC of the second battery pack having a smaller SOC is 10% or less (S303). If the SOC of the second battery pack is 10% or less, it is determined whether the SOC of the first battery pack P1 is 60% or more (S304) . Then, if the SOC of the second battery pack P2 is 60% or more, the second battery pack P2 is wirelessly charged by the first battery pack P1 (S306) (refer to the state (d) in FIG. 9). Then, charging is performed until the SOC of the second battery pack P2 becomes 200 (S307), and then, the SOC of the second battery pack P2 is managed to be 10% or more (S308) (in the present step, 10% is illustrated as the lower limit of the SOC of the battery pack, but the present disclosure is not limited thereto. The lower limit of the SOC of the battery pack is a particularly important factor among many factors that affect the SoH, and thus may be set arbitrarily by the user or may be determined according to the recommended setting by the battery manufacturer to be the value optimized for the characteristics of battery cells, as described above).

On the other hand, if it is determined that the SOC of the first battery pack P1 is less than 60% in step S304, the second battery pack P2 is wirelessly charged by the first battery pack P1 until the SOC of the second battery pack P2 becomes 10% (S305) (refer to the state (d) in FIG. 9).

In step S303, if the SOC of the second battery pack is not less than 10%, it is determined whether a request for balancing the battery packs is received from the driver (S309). However, this is exemplary and may be replaced by determining whether a preset balancing condition is satisfied.

If the balancing request is not received, current required for maintaining the vehicle system is consumed only from the power of the first battery pack P1 (S310) . On the other hand, if the balancing request is received, the current required for maintaining the vehicle system is consumed only from the power of the first battery pack P1 (S311), and at the same time, the second battery pack P2 is wirelessly charged by the first battery pack P1 (S312).

Then, it is determined whether the SOCs of the first battery pack P1 and the second battery pack P2 are the same (S313). If the SOCs of the first battery pack P1 and the second battery pack P2 are not the same, the process returns to step S309. Then, if the SOCs of the first battery pack P1 and the second battery pack P2 are the same, the first battery pack P1 and the second battery pack P2 are connected in parallel such that the current required for maintaining the system is consumed from the both packs (S314). This operation is continued until the operation is resumed, such as when the vehicle is started (S315).

As described above, the battery system applied to the vehicle 200 according to the embodiment of the present disclosure may achieve the same effect as the battery system according to the vehicle 100 of FIG. 3. In addition, since the battery system additionally includes the wireless power transmission/reception module, it is possible to effectively manage charging and discharging of a plurality of battery packs by independently operating the battery packs in all operating states of the vehicle 200, that is, in a situation of traveling, parking, charging, or the like.

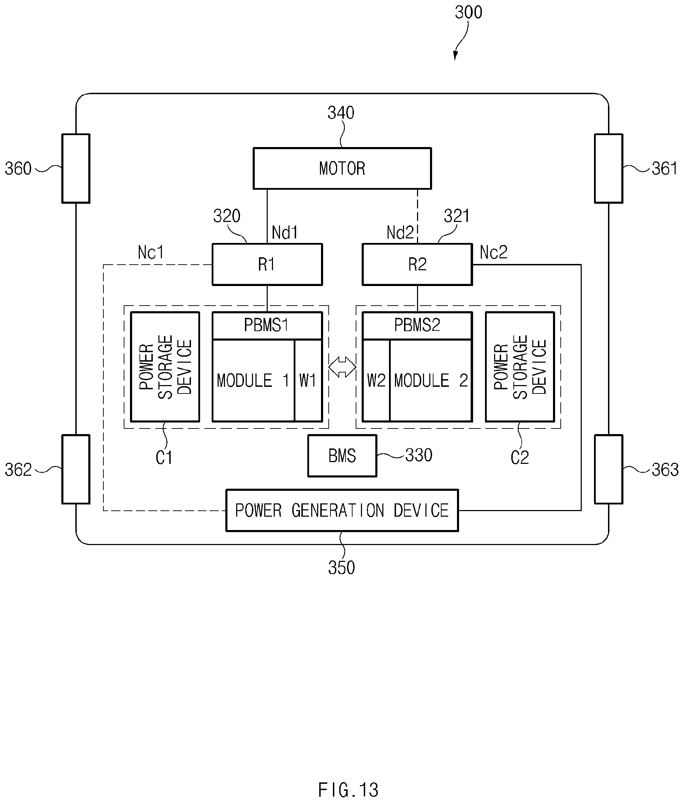

FIG. 13 is a diagram illustrating a configuration of a vehicle 300 to which a battery system according to yet another embodiment of the present disclosure is applied. In FIG. 13, the configuration and operation will be described centering on different parts from those of the vehicle 200 of FIG. 8.

Referring to FIG. 13, the battery system applied to the vehicle 300 further includes separate power storage devices C1 and C2 at the front ends of the first battery pack P1 and the second battery pack P2. The power storage devices C1 and C2 may store electric power generated from renewable energy. That is, the power storage devices C1 and C2 may store electric power generated by the power generation device 350.

As the power storage devices C1 and C2, capacitors, super capacitors, lithium ion capacitors, or the like with a high charging/discharging speed may be used.

As described above, by additionally connecting the power storage devices C1 and C2 in parallel to the front ends of the battery packs P1 and P2, it is possible to increase the lifespan of the battery packs P1 and P2.

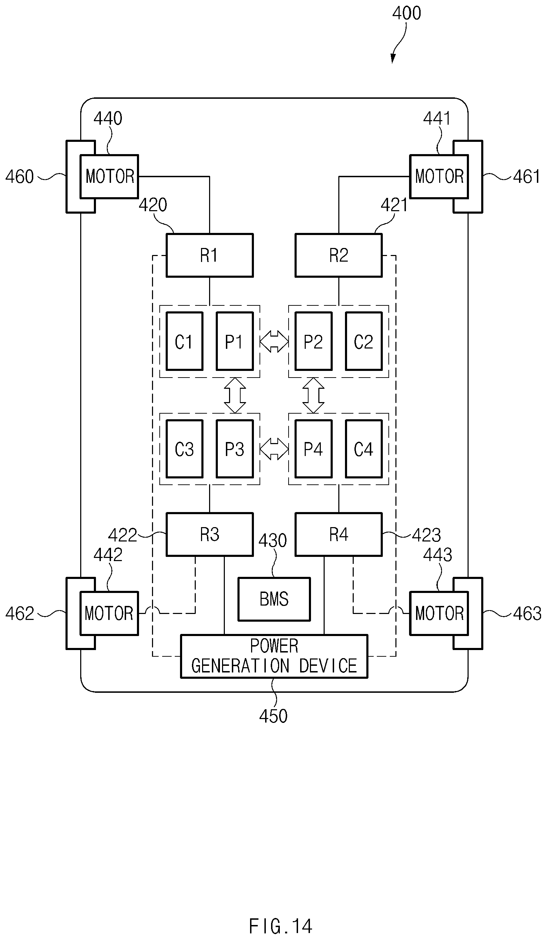

FIG. 14 is a diagram illustrating a configuration of a vehicle 400 to which a battery system according to yet another embodiment of the present disclosure is applied. In FIG. 14, the configuration and operation will be described centering on different parts from those of the vehicle 300 of FIG. 13.

Referring to FIG. 14, by way of example, the vehicle 400 is an in-wheel motor type in which motors 440 to 443 are installed corresponding to the four wheels 460 to 463, respectively. Accordingly, the first to fourth battery packs P1 to P4 are also provided. For such an in-wheel motor type, energy efficiency is high because the motor is close to the wheel and does not require a separate mechanism for transmitting the driving force. In addition, since the voltage specification of each battery pack is low, charging is easy, and SOH management for each battery pack is also easy.

In such a battery system, the battery packs P1 to P4 are divided into four groups such that they drive the respective corresponding motors 440 to 443. That is, the battery packs of each group may include corresponding switching elements 420 to 423 and charging and discharging nodes and be electrically connected to the different corresponding motor through the corresponding switching elements and the charging and discharging nodes, thereby performing charging and discharging operations independently of other groups.

In the configuration, the vehicle 400 may be selectively driven by front-wheel drive or rear-wheel drive. To this end, the first battery pack P1 and the second battery pack P2 may be used in the front-wheel drive and the third battery pack P3 and the fourth battery pack P4 may be used in the rear-wheel drive. With this configuration, the BMS 430 may be able to independently perform charging and discharging operations for each group.

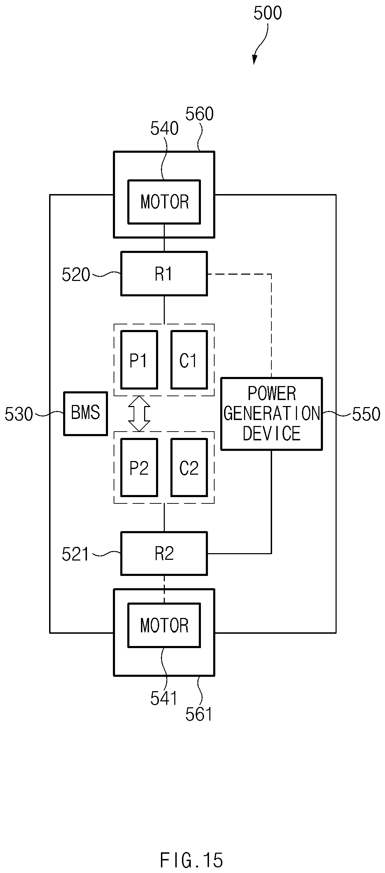

FIG. 15 is a diagram illustrating a configuration of a vehicle 500 to which a battery system according to yet another embodiment of the present disclosure is applied. FIG. 15 illustrates a two-wheeled vehicle (e.g., an electric scooter), where battery packs are divided into to two groups so that the first battery pack P1 drives a motor 540 of a front wheel 560 and the second battery pack P2 drives a second motor 541 of a rear wheel 561. Since the vehicle of the present embodiment operates in substantially the same manner as the vehicle 400 of FIG. 14, a detailed description will be omitted.

In the description above, although all components constituting the aspects of the present invention have been described as being combined into one unit or operated in combination, the present invention is not necessarily limited to such embodiments. That is, within the objective scope of the present invention, and as defined in the appended claims, one or more components may be selectively and operatively combined in any numbers.

In addition, terms such as "include", "comprise", or "have" described above mean that the corresponding component can be present unless otherwise stated, and thus it should be construed that other components may be further included rather than excluding other components. All terms including technical or scientific terms may be construed as having the same meaning as commonly understood by those of ordinary skill in the art to which the embodiments of the present disclosure belong, unless otherwise defined. Terms commonly used such as those defined in dictionaries should be interpreted as having a meaning that is consistent with their meaning in the context of the related art and will not be interpreted in an idealized or overly formal sense unless expressly so defined in the present disclosure.

The above description is merely illustrative of the technical idea of the present invention, and those of ordinary skill in the art to which the present invention pertains will be able to make various modifications and variations without departing from the essential characteristics of the present invention. Accordingly, the embodiments disclosed in the present invention are not intended to limit the technical idea of the present invention.

## Claims

1. A battery system (1) including a plurality of rechargeable battery packs (P1, P2), the battery system comprising:
a first battery pack (P1) that is rechargeable;
a second battery pack (P2) that is rechargeable independently of the first battery pack;
a first switching element (20-1; 120) configured to switch the first battery pack among a charging node (Nc1), a discharging node (Nd1) and an open node (No1);
a second switching element (20-2; 121) configured to switch the second battery pack among a charging node (Nc2), a discharging node (Nd2) and an open node (No2); and
a controller (30) configured to control switching states of the first switching element and the second switching element based on usage states and states of charge of the first battery pack and the second battery pack,
**characterized in that**:
each of the first battery pack and the second battery pack further includes a wireless power transmission/reception module (W1, W2); and
when the first battery pack (P1) is switched to the charging node (Nc1) and the second battery pack (P2) is switched to the open node (No2), the second battery pack (P2) wirelessly transmits power to the first battery pack (P1) through the wireless power transmission/reception module (W1, W2).

2. The battery system of claim 1, wherein one of the first battery pack and the second battery pack is connected to the charging node and wirelessly transmits power to the other battery pack through the wireless power transmission module.

3. The battery system of claim 1, wherein the discharging node is electrically connected to a motor.

4. The battery system of claim 1, wherein the charging node is electrically connected to a power source from renewable energy.

5. The battery system of claim 4, further comprising a power storage device (C1, C2) for storing power generated from the renewable energy.

6. The battery system of claim 4, further comprising a power generation device (150) for generating power from the renewable energy.

7. The battery system of claim 6, wherein the power generation device includes at least one of devices for generating power by solar energy, wind energy, pressure energy and kinetic energy.

8. The battery system of claim 1, further comprising a plurality of additional battery packs (..., Pn) that are rechargeable independently of the first battery pack and the second battery pack,
wherein the first battery pack, the second battery pack, and the additional battery packs are divided into a plurality of groups each including at least one battery pack.

9. The battery system of claim 8, wherein each of the plurality of groups has a corresponding switching element and a discharging node, and
each of the plurality of groups is electrically connected to a different corresponding motor through the corresponding switching element and the discharging node to perform charging and discharging operations independently of other groups.

10. The battery system of claim 9, wherein the plurality of groups are provided corresponding to motors installed corresponding to respective wheels of a vehicle.

11. The battery system of claim 10, wherein the controller controls charging and discharging operations of each of the plurality of groups according to a drive type of the vehicle.

12. A controlling method of a battery system including a first battery pack and a second battery pack that are rechargeable independently of each other, the controlling method comprising:
determining a traveling state of a vehicle;
determining states (S101) of charge of the first battery pack and the second battery pack;
switching the first battery pack among a discharging node, a charging node and an open node based on the traveling state and the state of charge; and
switching the second battery pack among the charging node, the discharging node and the open node based on the traveling state and the state of charge;
**characterized in that**:
each of the first battery pack and the second battery pack further includes a wireless power transmission/reception module (W1, W2); and
when the first battery pack is switched to the charging node and the second battery pack is switched to the open node, the second battery pack wirelessly transmits power to the first battery pack through the wireless power transmission/reception module.

## Patentansprüche

1. Batteriesystem (1), welches eine Mehrzahl wiederaufladbarer Batteriepacks (P1, P2) umfasst, wobei das Batteriesystem umfasst:
einen ersten Batteriepack (P1), welcher wiederaufladbar ist;
einen zweiten Batteriepack (P2), welcher unabhängig von dem ersten Batteriepack wiederaufladbar ist;
ein erstes Schaltelement (20-1; 120), welches dazu eingerichtet ist, den ersten Batteriepack zwischen einem Ladeknoten (Nc1), einem Entladeknoten (Nd1) und einem offenen Knoten (No1) zu schalten;
ein zweites Schaltelement (20-2; 121), welches dazu eingerichtet ist, den zweiten Batteriepack zwischen einem Ladeknoten (Nc2), einem Entladeknoten (Nd2) und einem offenen Knoten (No2) zu schalten; und
eine Steuereinrichtung (30), welche dazu eingerichtet ist, auf Grundlage von Nutzungszuständen und Ladezuständen des ersten Batteriepacks und des zweiten Batteriepacks Schaltzustände des ersten Schaltelements und des zweiten Schaltelements zu steuern,
**dadurch gekennzeichnet, dass**:
jeder des ersten Batteriepacks und des zweiten Batteriepacks ferner ein drahtloses Leistungs-Übertragungs-/Empfangsmodul (W1, W2) umfasst; und,
wenn der erste Batteriepack (P1) auf den Ladeknoten (Nc1) geschaltet ist und der zweite Batteriepack (P2) auf den offenen Knoten (No2) geschaltet ist, der zweite Batteriepack (P2) durch das drahtlose Leistungs-Übertragungs-/Empfangsmodul (W1, W2) drahtlos eine Leistung auf den ersten Batteriepack (P1) überträgt.

2. Batteriesystem nach Anspruch 1, wobei einer aus dem ersten Batteriepack und dem zweiten Batteriepack mit dem Ladeknoten verbunden ist und durch das drahtlose Leistungsübertragungsmodul drahtlos eine Leistung an den anderen Batteriepack überträgt.

3. Batteriesystem nach Anspruch 1, wobei der Entladeknoten elektrisch mit einem Motor verbunden ist.

4. Batteriesystem nach Anspruch 1, wobei der Ladeknoten elektrisch mit einer Leistungsquelle aus erneuerbarer Energie verbunden ist.

5. Batteriesystem nach Anspruch 4, ferner umfassend eine Leistungsspeichervorrichtung (C1, C2) zum Speichern von aus der erneuerbaren Energie erzeugter Leistung.

6. Batteriesystem nach Anspruch 4, ferner umfassend eine
Leistungserzeugungsvorrichtung (150) zum Erzeugen von Leistung aus der erneuerbaren Energie.

7. Batteriesystem nach Anspruch 6, wobei die Leistungserzeugungsvorrichtung wenigstens eine aus Vorrichtungen zum Erzeugen von Leistung durch Solarenergie, Windenergie, Druckenergie und kinetischer Energie umfasst.

8. Batteriesystem nach Anspruch 1, ferner umfassend eine Mehrzahl zusätzlicher Batteriepacks (..., Pn), welche unabhängig von dem ersten Batteriepack und dem zweiten Batteriepack wiederaufladbar sind,
wobei der erste Batteriepack, der zweite Batteriepack und die zusätzlichen Batteriepacks in eine Mehrzahl von Gruppen unterteilt sind, welche jeweils wenigstens einen Batteriepack umfassen.

9. Batteriesystem nach Anspruch 8, wobei jede der Mehrzahl von Gruppen ein entsprechendes Schaltelement und einen Entladeknoten aufweist und
jede der Mehrzahl von Gruppen durch das entsprechende Schaltelement und den Entladeknoten elektrisch mit einem anderen entsprechenden Motor verbunden ist, um unabhängig von anderen Gruppen Lade- und Entladevorgänge durchzuführen.

10. Batteriesystem nach Anspruch 9, wobei die Mehrzahl von Gruppen entsprechend Motoren bereitgestellt ist, welche entsprechend jeweiligen Rädern eines Fahrzeugs installiert sind.

11. Batteriesystem nach Anspruch 10, wobei die Steuereinrichtung Lade- und Entladevorgänge jeder der Mehrzahl von Gruppen gemäß einem Antriebstyp des Fahrzeugs steuert.

12. Steuerverfahren eines Batteriesystems, welches einen ersten Batteriepack und einen zweiten Batteriepack umfasst, welche unabhängig voneinander wiederaufladbar sind, wobei das Steuerverfahren umfasst:
Bestimmen eines Fahrzustands eines Fahrzeugs;
Bestimmen von Ladezuständen (S101) des ersten Batteriepacks und des zweiten Batteriepacks;
Schalten des ersten Batteriepacks zwischen einem Entladeknoten, einem Ladeknoten und einem offenen Knoten auf Grundlage des Fahrzustands und des Ladezustands; und
Schalten des zweiten Batteriepacks zwischen dem Ladeknoten, dem Entladeknoten und dem offenen Knoten auf Grundlage des Fahrzustands und des Ladezustands;
**dadurch gekennzeichnet, dass**:
jeder des ersten Batteriepacks und des zweiten Batteriepacks ferner ein drahtloses Leistungs-Übertragungs-/Empfangsmodul (W1, W2) umfasst; und,
wenn der erste Batteriepack auf den Ladeknoten geschaltet ist und der zweite Batteriepack auf den offenen Knoten geschaltet ist, der zweite Batteriepack durch das drahtlose Leistungs-Übertragungs-/Empfangsmodul drahtlos eine Leistung auf den ersten Batteriepack überträgt.

## Revendications

1. Système de batterie (1) comportant une pluralité de blocs-batterie rechargeables (P1, P2), le système de batterie comprenant :
un premier bloc-batterie (P1) qui est rechargeable ;
un deuxième bloc-batterie (P2) qui est rechargeable indépendamment du premier bloc-batterie ;
un premier élément de commutation (20-1 ; 120) configuré pour commuter le premier bloc-batterie entre un noeud de charge (Nc1), un noeud de décharge (Nd1) et un noeud ouvert (No1) ;
un deuxième élément de commutation (20-2 ; 121) configuré pour commuter le deuxième bloc-batterie entre un noeud de charge (Nc2), un noeud de décharge (Nd2) et un noeud ouvert (No2) ; et
un dispositif de contrôle (30) configuré pour contrôler des états de commutation du premier élément de commutation et du deuxième élément de commutation sur la base d'états d'utilisation et d'états de charge du premier bloc-batterie et du deuxième bloc-batterie,
**caractérisé en ce que** :
chacun du premier bloc-batterie et du deuxième bloc-batterie comporte en outre un module d'émission/réception d'énergie sans fil (W1, W2) ; et
lorsque le premier bloc-batterie (P1) est commuté vers le noeud de charge (Nc1) et que le deuxième bloc-batterie (P2) est commuté vers le noeud ouvert (No2), le deuxième bloc-batterie (P2) émet de l'énergie sans fil au premier bloc-batterie (P1) par l'intermédiaire du module d'émission/réception d'énergie sans fil (W1, W2).

2. Système de batterie selon la revendication 1, dans lequel l'un du premier bloc-batterie et du deuxième bloc-batterie est connecté au noeud de charge et émet de l'énergie sans fil à l'autre bloc-batterie par l'intermédiaire du module d'émission d'énergie sans fil.

3. Système de batterie selon la revendication 1, dans lequel le noeud de décharge est électriquement connecté à un moteur.

4. Système de batterie selon la revendication 1, dans lequel le noeud de charge est électriquement connecté à une source d'énergie provenant d'une énergie renouvelable.

5. Système de batterie selon la revendication 4, comprenant en outre un dispositif de stockage d'énergie (C1, C2) pour stocker l'énergie générée à partir de l'énergie renouvelable.

6. Système de batterie selon la revendication 4, comprenant en outre un dispositif de génération d'énergie (150) pour générer de l'énergie à partir de l'énergie renouvelable.

7. Système de batterie selon la revendication 6, dans lequel le dispositif de génération d'énergie comporte au moins un parmi des dispositifs de génération d'énergie par énergie solaire, énergie éolienne, énergie de pression et énergie cinétique.

8. Système de batterie selon la revendication 1, comprenant en outre une pluralité de blocs-batteries supplémentaires (..., Pn) qui sont rechargeables indépendamment du premier bloc-batterie et du deuxième bloc-batterie,
dans lequel le premier bloc-batterie, le deuxième bloc-batterie et les blocs-batteries supplémentaires sont divisés en une pluralité de groupes comportant au moins un bloc-batterie.

9. Système de batterie selon la revendication 8, dans lequel chacun de la pluralité de groupes a un élément de commutation et un noeud de décharge correspondants, et
chacun de la pluralité de groupes est électriquement connecté à un moteur correspondant différent par l'intermédiaire de l'élément de commutation et du noeud de décharge correspondants pour réaliser des opérations de charge et de décharge indépendamment des autres groupes.

10. Système de batterie selon la revendication 9, dans lequel la pluralité de groupes sont fournis en correspondance avec des moteurs installés correspondant à des roues respectives d'un véhicule.

11. Système de batterie selon la revendication 10, dans lequel le dispositif de contrôle contrôle des opérations de charge et de décharge de chacun de la pluralité de groupes selon un type d'entraînement du véhicule.

12. Procédé de contrôle d'un système de batterie comportant un premier bloc-batterie et un deuxième bloc-batterie qui sont rechargeables indépendamment l'un de l'autre, le procédé de contrôle comprenant :
la détermination d'un état de déplacement d'un véhicule ;
la détermination d'états (S101) de charge du premier bloc-batterie et du deuxième bloc-batterie ;
la commutation du premier bloc-batterie entre un noeud de décharge, un noeud de charge et un noeud ouvert sur la base de l'état de déplacement et de l'état de charge ; et
la commutation du deuxième bloc-batterie entre le noeud de charge, le noeud de décharge et le noeud ouvert sur la base de l'état de déplacement et de l'état de charge ;
**caractérisé en ce que** :
chacun du premier bloc-batterie et du deuxième bloc-batterie comporte en outre un module d'émission/réception d'énergie sans fil (W1, W2) ; et
lorsque le premier bloc-batterie est commuté vers le noeud de charge et que le deuxième bloc-batterie est commuté vers le noeud ouvert, le deuxième bloc-batterie émet de l'énergie sans fil au premier bloc-batterie par l'intermédiaire du module d'émission/réception d'énergie sans fil.
